(19) Europäisches Patentamt
European Patent Office
Office européen des brevets

(11) EP 0 542 081 B1

(12) # EUROPÄISCHE PATENTSCHRIFT

(45) Veröffentlichungstag und Bekanntmachung des Hinweises auf die Patenterteilung: **26.02.1997 Patentblatt 1997/09**

(51) Int. Cl.[6]: **A01N 25/34**, A01K 27/00 // (A01N25/34, 53:00, 47:22, 43:40)

(21) Anmeldenummer: **92118738.1**

(22) Anmeldetag: **02.11.1992**

(54) **Pyrethroidhaltige Formkörper auf Basis thermoplastisch verarbeitbarer elastomerer Copolyester,Verfahren zu ihrer Herstellung und Verwendung zur Kontrolle von Schädlingen**

Pyrethroid containing shaped articles made of thermoplastic workable elastomeric copolyesters, method for their preparation and use for the control of pests

Objets moulés contenant des pyréthroides en matière de moulage thermoplastique de copolyesters elastomériques, méthode pour leur préparation et leur utilisation pour le contrôle des parasites

(84) Benannte Vertragsstaaten:
**AT BE CH DE DK ES FR GB GR IE IT LI LU NL PT SE**

(30) Priorität: **13.11.1991 DE 4137290**

(43) Veröffentlichungstag der Anmeldung:
**19.05.1993 Patentblatt 1993/20**

(73) Patentinhaber: **BAYER AG**
**51368 Leverkusen (DE)**

(72) Erfinder:
- **Brandt, Heinz-Dieter, Dr.**
  **W-4150 Krefeld (DE)**
- **Dhein, Rolf, Dr.**
  **W-4150 Krefeld (DE)**
- **Hugl, Herbert, Dr.**
  **W-5060 Bergisch Gladbach 2 (DE)**
- **Hackemüller, Doris, Dr.**
  **W-4000 Düsseldorf 1 (DE)**
- **Stendel, Wilhelm, Dr.**
  **W-5600 Wuppertal 1 (DE)**

(56) Entgegenhaltungen:
**EP-A- 0 135 853** **EP-A- 0 338 821**
**DE-A- 2 213 128** **FR-A- 2 391 721**
**US-A- 3 023 192** **US-A- 4 400 374**
**US-A- 5 003 930**

- **PATENT ABSTRACTS OF JAPAN vol. 10, no. 71 (C-334)(2128) 20. M rz 1986**
- **CHEMICAL ABSTRACTS, vol. 116, no. 11, 16. M rz 1992, Columbus, Ohio, US; abstract no. 101163, K.ITO ET AL. 'Rodent repellent sheets containing terpenoids and poly(butylene terephtalate)' Seite 260 ;Spalte 1 ;**
- **CHEMICAL ABSTRACTS, vol. 87, no. 9, 29. August 1977, Columbus, Ohio, US; abstract no. 64067f, C.M.GARRISON ET AL. 'Sustained-release herbicidal composition' Seite 188 ;Spalte 2 ;**
- **CHEMICAL PATENTS INDEX, BASIC ABSTRACTS JOURNAL Section Ch, Week 8731, 30. September 1987 Derwent Publications Ltd., London, GB; Class C, AN 87-217572**
- **CENTRAL PATENTS INDEX, BASIC ABSTRACTS JOURNAL Section Ch, Week D43, 16. Dezember 1981 Derwent Publications Ltd., London, GB; Class C, AN 78581 D/43**
- **Budavari et al.eds.: The Merck Index, An Encyclopedia of Chemicals , Drugs and Biologicals, 11th ed., Merck & Co. Inc., Rahway, 1989, Seite 644, nr.4051: Flubenzimin**

Bemerkungen:
Die Akte enthält technische Angaben, die nach dem Eingang der Anmeldung eingereicht wurden und die nicht in dieser Patentschrift enthalten sind.



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.14/3.4

## Beschreibung

Die vorliegende Erfindung betrifft neue pyrethroidhaltige Formkörper auf Basis thermoplastisch verarbeitbarer elastomerer Copolyester, deren Herstellung und deren Verwendung zur Kontrolle von Schädlingen, insbesondere bei Nutz- und Haustieren.

Formkörper, die Wirkstoffe zur Kontrolle von Schädlingen enthalten, sind bekannt. Sie basieren auf der langsamen Freisetzung von Wirkstoffen aus einer wirkstoffhaltigen Trägermatrix von Kunststoffen (vergleiche z.B. Aries et al US P 3 814 061, Greenberg US-P 3 918 407, Miller und Morales US-P 3 944 662, Millionis und Spicer US-P 4 041 151, Pasarela US-P 4 145 409, Greenberg und Cloud US-P 4 158 051, v. Bittera et al US-P 4 225 578. McDaniel und Pruitt EP-OS 0 052 411 B1, Grubb et al US-P 3 852 416 und Pearce US-P 4 536 388.

Der bei bekannten Formkörpern praktisch fast ausschließlich eingesetzte Träger ist PVC. Andere Träger werden in der Literatur zwar erwähnt, haben aber bis jetzt keinen Eingang in die Praxis gefunden. So wird in US-P 4 195 075 unter anderem erwähnt, daß als Trägerpolymere für Ohrmarken auch thermoplastische Elastomere in Frage kommen. Auch in diesem Zitat werden jedoch ausschließlich Beispiele mit weichmacherhaltigem PVC als Trägerpolymer beschrieben.

Dies ist auch nicht erstaunlich. PVC ist preiswert und leicht zugänglich. Es ist auch in breiten Bereichen mit anderen Stoffen, insbesondere Weichmachern, mischbar. Diese Weichmacher haben bei wirkstoffhaltigen PVC-Körpern die Funktion den Wirkstoff im Träger gelöst zu halten und ihn langsam an die Körperoberfläche zu transportieren. Dort verdampft der Wirkstoff oder er wird zusammen mit dem Weichmacher von der Oberfläche abgerieben. Das Zusammenwirken der drei Komponenten PVC-Träger, Weichmacher und Wirkstoff bestimmt ob und wieweit der Formkörper praktisch einsetzbar ist.

Wird eine Komponente des Gesamtsystems geändert, läßt sich nicht mehr vorhersehen, ob das System in der Praxis noch wirkt. Dies trifft besonders zu, falls der Weichmacher, dem ja beim Wirkstofftransport eine Schlüsselfunktion zukommt, geändert oder weggelassen wird.

Aus verschiedenen Gründen ist es wünschenswert PVC als Trägermaterial zu ersetzen. Auch ist es vorteilhaft auf den Einsatz von Weichmachern teilweise oder ganz zu verzichten. Es galt daher ein Wirkstoff-Formkörper-System zu finden bei dem auf PVC als Trägermaterial sowie auf Weichmacher verzichtet werden kann und das dennoch in der Praxis gut wirksam ist.

Thermoplastische Elastomere sind Werkstoffe, die elastomere Phasen in thermoplastisch verarbeitbaren Polymeren entweder physikalisch eingemischt oder chemisch eingebunden enthalten. Man unterscheidet Polyblends; denen die elastomeren Phasen physikalisch eingemischt vorliegen und Block-Copolymere in denen die elastomeren Phasen Bestandteil des polymeren Gerüsts sind. Durch den Aufbau der thermoplastischen Elastomere liegen harte und weiche Bereiche nebeneinander vor. Die harten Bereiche bilden dabei eine kristalline Netzstruktur oder eine kontinuierliche Phase deren Zwischenräume von elastomeren Segmenten ausgefüllt sind. Aufgrund dieses Aufbaus haben diese Werkstoffe kautschukähnliche Eigenschaften.

Man kann 5 Hauptgruppen der thermoplastischen Elastomere unterscheiden:

1. Copolyester
2. Polyether-Block-Amide (PEBA)
3. Thermoplastische Polyurethane (TPU)
4. Thermoplastische Polyolefine (TPO)
5. Styrol-Block Copolymere

Diese 5 Hauptgruppen zeigen bei chemisch völlig unterschiedlichem Aufbau gleichartige makroskopisch physikalische Eigenschaften. Trotz dieser makroskopisch gleichartigen Eigenschaften verhalten sich diese Hauptgruppen bei der Einmischung und Freisetzung von Wirkstoffen völlig unterschiedlich.

Die Verwendung bestimmter thermoplastischer Elastomere als Träger für Wirkstoffe ist bekannt z.B. aus EP-OS 338 821, DE-OS 3 611 137. In EP-OS 338 821 wird die Verwendung von Styrol-Butadien-Block-Copolymeren als Träger beschrieben. In DE-OS 3 611 137 wird die Verwendung von Polyetherblockamiden als Träger für flüchtige Wirkstoffe beschrieben.

Aus US-P 4 400 374 sind thermoplastische Elastomere bekannt, die neben Wirkstoffen Porosigene enthalten, die dazu beitragen, daß der Wirkstoff aus dem Trägerpolymeren ausgewaschen werden kann.

Aus JP-A 56 115 374 (Derwent Abstract 78581 D/43) sind Formkörper aus thermoplastischen Elastomeren bekannt, die flüchtige Bestandteile freisetzen.

Die Verwendung von Copolyestern als Träger für Wirkstoffe mit niedrigem Dampfdruck wie Pyrethroide ist nicht bekannt.

Gegenstand der vorliegenden Erfindung sind

1. Halsbänder und Halsbandanhänger (Medaillons) zur Bekämpfung von Parasiten an Tieren dadurch gekennzeichnet, daß sie als Träger thermoplastische Elastomere auf Basis von Copolyestern und als Wirkstoffe parasitizide Wirkstoffe aus der Gruppe der synthetischen Pyrethroide gegebenenfalls neben üblichen Zusätzen enthalten.

Trotz gleichartiger makroskopischer Eigenschaften verhalten sich die Hauptgruppen der thermoplastischen Elastomere gegenüber der Einmischung und Freisetzung von Wirkstoffen völlig unterschiedlich. So zeigen z.B. Formkörper auf Basis von thermoplastischen Polyurethanen und thermoplastischen Olefinen eine völlig unzureichende Wirkstofffreisetzung. Es ist daher nicht möglich, Rückschlüsse aus dem Verhalten eines Vertreters einer Hauptgruppe der thermoplastischen Elastomere auf die übrigen Hauptgruppen zu ziehen.

Es war überraschend, daß die erfindungsgemäßen Bänder und Anhänger (Medaillons) auf Basis thermoplastisch verarbeitbarer elastomerer Copolyester unter praktischen Bedingungen gut und lange wirken. Es war besonders überraschend, daß es bei den erfindungsgemäßen Bändern und Anhängern zu einer ausreichenden und lange anhaltenden Wirkstoffreisetzung kommt. Geeignete Copolyester (segmentierte Polyesterelastomere) sind beispielsweise aus einer Vielzahl wiederkehrender, kurzkettiger Estereinheiten und langkettiger Estereinheiten, die durch Esterbindungen vereinigt sind, aufgebaut, wobei die kurzkettigen Estereinheiten etwa 15-65 Gew.-% des Copolyesters ausmachen und die Formel I haben.

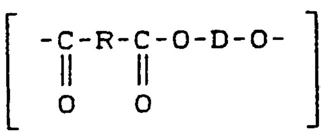

Formel I

in welcher

R für einen zweiwertigen Rest einer Dicarbonsäure steht, der ein Molekulargewicht von unter etwa 350 hat,
D für einen zweiwertigen Rest eines organischen Diols steht, der ein Molekulargewicht von unter etwa 250 hat,
Die langkettigen Estereinheiten machen etwa 35-85 Gew. -% des Copolyesters aus und haben die Formel II

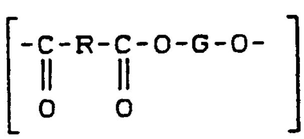

Formel II

in welcher
R für einen zweiwertigen Rest einer Dicarbonsäure steht, der ein Molekulargewicht von unter etwa 350 hat,
G für einen zweiwertigen Rest eines langkettigen Glykols steht, das ein durchschnittliches Molekulargewicht von etwa 350 bis 6000 hat.

Die erfindungsgemäß verwendbaren Copolyester sind herstellbar, indem man miteinander a) eine oder mehrere Dicarbonsäuren, b) ein oder mehrere lineare, langkettige Glykole und c) ein oder mehrere niedermolekulare Diole polymerisiert.

Die Dicarbonsäuren für die Herstellung des Copolyesters können aromatisch, aliphatisch oder cycloaliphatisch sein. Die bevorzugten Dicarbonsäuren sind die aromatischen Säuren mit 8-16 C-Atomen, insbesondere Phenylendicarbonsäuren, wie Phthal-, Terephthal- und Isophthalsäure.

Die niedermolekularen Diole für die Umsetzung zur Bildung der kurzkettigen Estereinheiten der Copolyester gehören den Klassen der acyclischen, alicyclischen und aromatischen Dihydroxyverbindungen an. Die bevorzugten Diole haben 2-15 C-Atome, wie Ethylen-, Propylen-, Tetramethylen-, Isobutylen-, Pentamethylen-, 2,2-Dimethyltrimethylen-, Hexamethylen- und Decamethylenglykole, Dihydroxycyclohexan, Cyclohexandimethanol, Resorcin, Hydrochinon und dergleichen. Zu den Bisphenolen für den vorliegenden Zweck gehören Bis-(p-hydroxy)-diphenyl, Bis-(p-hydroxyphenyl)-methan, Bis-(p-hydroxyphenyl)-ethan und Bis-(p-hydroxyphenyl)-propan.

Die langkettigen Glycole zur Herstellung der weichen Segmente der Copolyester haben vorzugsweise Molekulargewichte von etwa 600 bis 3000. Zu ihnen gehören Poly(alkylenether)-glycole, bei denen die Alkylengruppen 2-9 Kohlenstoffatome aufweisen.

Auch Glycolester von Poly-(alkylenoxid)-dicarbonsäuren können als langkettiges Glycol Verwendung finden.

Auch Polyesterglycole können als langkettiges Glycol Verwendung finden.

Zu den langkettigen Glycolen gehören auch Polyformale, die durch Umsetzung von Formaldehyd mit Glycolen erhalten werden Auch Polythioetherglycole sind geeignet. Polybutadien- und Polyisoprenglycole, Mischpolymere derselben und gesättigte Hydrierungsprodukte dieser Materialien stellen zufriedenstellende langkettige polymere Glycole dar.

Verfahren zur Synthese derartiger Copolyester sind aus DOS 2 239 271, DOS 2 213 128, DOS 2 449 343 und US-P 3 023 192 bekannt.

Geeignete Copolyester im Sinne der Erfindung sind z.B. unter den Handelsnamen ®Hytrel der Fa. Du Pont, ®Pelpren der Fa. Toyobo®, Arnitel der Fa. Akzo, ®Ectel der Fa. Eastman Kodak und ®Riteflex der Fa. Hoechst erhältlich.

Als Wirkstoffe für die erfindungsgemäßen Bänder und Anhänger seien Parasitizide zur Verwendung an Tieren aus der Gruppe der synthetischen Pyrethroide genannt.

Zu den synthetischen Pyrethroiden zählen Verbindungen der Formel I

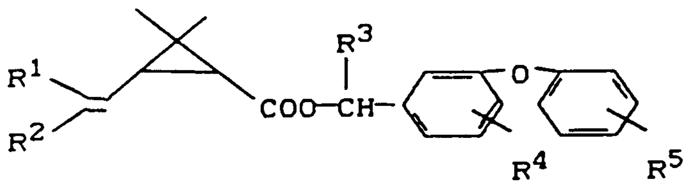

Formel I

in welcher

| | |
|---|---|
| $R^1$ und $R^2$ | für Halogen, gegebenenfalls halogensubstituiertes Alkyl, gegebenenfalls halogensubstituiertes Phenyl stehen, |
| $R^3$ | für Wasserstoff oder CN steht, |
| $R^4$ | für Wasserstoff oder Halogen steht, |
| $R^5$ | für Wasserstoff oder Halogen steht, |

Bevorzugt sind synthetische Pyrethroide der Formel I in welcher

$R^1$ für Halogen, insbesondere Fluor, Chlor, Brom steht,
$R^2$ für Halogen, insbesondere Fluor, Chlor, Brom, Trihalogenmethyl, Phenyl, Chlorphenyl steht,
$R^3$ für Wasserstoff oder CN steht,
$R^4$ für Wasserstoff oder Fluor steht,
$R^5$ für Wasserstoff steht.

Besonders bevorzugt sind synthetische Pyrethroide der Formel I in welcher

$R^1$ für Chlor steht,
$R^2$ für Chlor, Trifluormethyl, p-Chlorphenyl steht,
$R^3$ für CN steht,
$R^4$ für Wasserstoff oder Fluor steht,
$R^5$ für Wasserstoff steht.

Insbesondere seien Verbindungen der Formel I genannt in welcher

$R^1$ für Chlor steht,
$R^2$ für Chlor oder p-Chlorphenyl steht,
$R^3$ für CN steht,
$R^4$ für Fluor in 4-Stellung steht,
$R^5$ für Wasserstoff steht.

Im Einzelnen seien genannt:

3-[2-(4-Chlorphenyl)-2-chlorvinyl]-2,2-dimethyl-cyclopropancarbonsäure [(α-cyano-4-fluor-3-phenoxy)-benzyl]-ester (Flumethrin),
2,2-Dimethyl-3-(2,2-dichlorvinyl)-cyclopropancarbonsäure-α-cyano(4-fluor-3-phenoxy)-benzyl-ester (Cyfluthrin) und seine Enantiomere und Stereoisomere,
α-Cyano-3-phenoxybenzyl(±)-cis, trans-3-(2,2-dibromvinyl)-2,2-dimethylcyclopropancarboxylat (Deltamethrin),
2,2-Dimethyl-3-(2,2-dichlorvinyl)-cyclopropancarbonsäure-α-cyano-3-phenoxybenzylester (Cypermethrin),
3-Phenoxybenzyl(±)-cis, trans-3-(2,2-dichlorvinyl)-2,2-dimethylcyclopropancarboxylat (Permethrin),
α-(p-Cl-phenyl)-isovaleriansäure-α-cyano-3-phenoxy-benzylester (Fenvalerate),
2-Cyano-3-phenoxybenzyl-2-(2-chlor-α,α,α-trifluor-p-toluidino)-3-methylbutyrat (Fluvalinate).

Besonders hervorgehoben seien die Wirkstoffe mit den common names Cyfluthrin, Flumethrin.

Die Wirkstoffe können in den Formkörpern allein oder in Mischung miteinander oder mit Propoxur, Pyriproxifen, Methopren, Amitraz vorliegen.

Die Wirkstoffe liegen in den Formkörpern in Konzentrationen von 0,1 - 20 Gew.-% vor, bevorzugt zwischen 1 - 10 Gew.-%.

Die erfindungsgemäßen Formkörper können weiterhin die für Kunststoffe üblichen Additive enthalten. Übliche Additive sind beispielsweise Pigmente, Stabilisatoren, Fließmittel, Gleitmittel, Entformungsmittel.

Beispiele für übliche Additive sind:

1. <u>Antioxidantien</u>

1.1 <u>Alkylierte Monophenole</u>, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Ditert.butyl-4-methoxymethylphenol.
1.2 <u>Alkylierte Hydrochinone</u>, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyl-oxyphenyl.
1.3 <u>Hydroxylierte Thiodinhenylether</u>, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
1.4 <u>Alkyliden-Bisphenole</u>, z.B. 2,2'-Methylen-bis-(6-tert.butyl-4-methylphenol), 2,2'-Methylen-bis-(6-tert.butyl-4-ethylphenol), 2,2'-Methylen-bis-(4-methyl-6(α-methylcyclohexyl)-phenol), 2,2'-Methylen-bis-(4-methyl-6-cyclohexylphenol), 2,2'-Methylen-bis-(6-nonyl-4-methylphenol), 2,2'-Methylenbis-(4,6-di-tert.butylphenol), 2,2'-Ethylidenbis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylenbis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Di-(3-tert.butyl-4-hydroxy-5-methyl-phenyl)-dicyclopentadien, Di-[2-(3'-tert.butyl-2'-hydroxy-5'-methylbenzyl)-6-tert.butyl-4-methyl-phenyl]-terephthalat.
1.5 <u>Benzylverbindungen</u>, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Ditert.butyl-4-hydroxybenzyl-mercaptoessigsäure-isooctylester, Bis-(4-tert.butyl-3-hydroxy-2,6-dimethylbenzyl)-dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzylphosphonsäure-dioctadecylester, 3,5-Di-tert.butyl-4-hydroxybenzyl-phosphonsäure-monoethylester, Calcium-Salz.
1.6 <u>Acylaminophenole</u>, z.B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-di-tert.butyl-4-hydroxyphenyl)-carbaminsäureoctylester.
1.7 <u>Ester der β-(3,5-Di-tert.butyl-4-hydroxyohenyl)-propionsäure</u> mit ein- oder mehrwertigen Alkoholen, wie z.B. Methanol, Octadecanol, 1,6-Hexandiol, Neopentylglycol, Thiodiethylenglycol, Diethylenglycol, Triethylenglycol, Pentaerythrit, Tris-hydroxyethylisocyanurat, Di-hydroxyethyl-oxalsäurediamid.
1.8 <u>Ester der β-(5-tert.butyl-4-hydroxy-3-methylphenyl)-propionsäure</u> mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyloxyalsäurediamid.
1.9 <u>Amide der β-(3,5-Di-tert.butyl-4-hydroxyphenyl)-propionsäure</u>, wie z.B. N,N'-Di-(3,5-di-tert.butl-4-hydroxyphenylpropionyl)-hexamethylendiamin, N,N'-(3,5-di-tert.butyl-4-hydroxyphenylpropionyl)-trimethylendiamin, N,N'-Di-(3,5-di-tert.butyl-4-hydroxyphenylpropionyl)-hydrazin.

2. <u>UV-Absorber und Lichtschutzmittel</u>

2.1 2-(2'-Hydroxyphenyl)-benztriazole, wie z.B. das 5'-Methyl-, 3',5'-Di-tert.butyl-, 5'-tert.butyl-, 5'-(1,1,3,3-Tetramethylbutyl)-, 5-Chlor-3',5'-ditert.butyl-, 5-Chlor-3'-tert.butyl-5'-methyl, 3'-sec.butyl-5'-tert.butyl, 4'-Octoxy-, 3',5'-Ditert.amyl-, 3',5'-Bis-(α,α-dimethylbenzyl)-Derivat.

2.2 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydoxy-, 2'-Hydroxy-4,4'-dimethoxy-Derivat.

2.3 Ester von gegebenenfalls substituierten Benzoesäuren, wie z.B. 4-tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-ditert.butylphenylester, 3,5-Di-tert.butyl-4-hydroxybenzoesäure-hexadecylester.

2.4 Acrylate, wie z.B. α-Cyan-β,β-diphenylacrylsäure-ethylester beziehungsweise -isooctylester, α-Carbomethoxy-zimtsäuremethylester, α-Cyano-β-methyl-p-methoxy-zimtsäuremethylester beziehungsweise -butylester, α-Carbomethoxy-p-methoxy-zimtsäuremethyl-ester, N-(β-Carbomethoxy-β-cyanovinyl)-2-methyl-indolin.

2.5 Nickelverbindungen, wie z.B. Nickelkomplexe des 2,2'-Thio-bis-[4-(1,1,3,3-tetramethylbutyl)-phenols], wie der 1:1- oder 1:2-Komplex, gegebenenfalls mit zusätzlichen Liganden, wie n-Butylamin, Triethanolamin oder N-Cyclohexyl-diethanolamin, Nickeldibutyl-dithiocarbamat, Nickelsalze von 4-Hydroxy-3,5-di-tert.butylbenzyl-phosphonsäuremonoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6 Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).

2.7 Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid Gemische von o- und p-Methoxy- sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-ditert.butyl-4-hydroxyphenylpropionyl)-hydrazin, 3-Salicyloylamino-1,2,4-triazol, Bis-benzylidenoxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetraoxa-3,9-diphosphaspiro[5,5]undecan.

5. Peroxidzerstörende Verbindungen, wie z.B. Ester der β-Thiodipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und - hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die erfindungsgemäßen Formkörper werden durch Vermischen der Einzelkomponenten erhalten. Das Vermischen kann nach bekannten Techniken in jeglicher Weise erfolgen, z.B. über Kneter oder Schneckenmaschinen. Die Weiterverarbeitung erfolgt durch die bekannten Techniken der Thermoplastverarbeitung, z.B. durch Extrusion oder Spritzguß.

Formkörper gemäß vorliegender Erfindung sind Halsbänder, Halsbandanhänger (Medaillons), Ohr-, Schwanz-, Fußbänder, Ohrmarken, Folien, Abziehfolien, Klebestreifen, Streifen, Platten, Granulate. Bevorzugt genannt seien Halsbänder und Medaillons für Hunde und Katzen.

Die Formkörper dienen zur Bekämpfung von Parasiten auf dem Wirtstier, am Wirtstier und in der Umgebung von

Wirtstieren wie Haus-, Hobby- und Nutztieren.

Zu den Haus-, Hobby- und Nutztieren gehören Säugetiere wie z.B. Rinder, Schafe, Ziegen, Pferde, Schweine, Hunde, Katzen.

Zu den Schädlingen gehören:

Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bovicola spp;
aus der Ordnung der Diptera z.B. Aedes spp., Culex spp., Simulium spp., Sklepotomus spp., Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp..
Aus der Ordnung der Siphonaptera z.B. Ctenocephalides spp., Echidnophaga spp., Ceratophyllus spp..
Aus der Ordnung der Metastigmata z.B. Hyalomma spp., Rhipicephalus spp., Boophilus spp., Amblyomma spp., Haemaphysalis spp., Dermacentor spp., Ixodes spp., Argas spp., Ornithodorus spp., Otobius spp.;
aus der Ordnung der Mesostigmata z.B. Dermanyssus spp., Ornithonyssus spp., Pneumonyssus spp..
Aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp. Cytodites spp., Laminosioptes spp..

Die folgenden Beispiele für insektizide Formteile auf der Basis Copolyester sollen die Erfindung illustrieren

Beispiel A

| | | |
|---|---|---|
| Zusammensetzung: | β-Cyfluthrin | 12,00 g |
| | Copolyester (Hytrel$^R$) | 88,00 g |
| | | 100,00 g |

Herstellung:

Die Mischung wird in herkömmlicher Weise zu Hundehalsbändern extrudiert.

Beispiel B

| | | |
|---|---|---|
| Zusammensetzung: | β-Cyfluthrin | 10,00 g |
| | Pyriproxifen | 0,35 g |
| | Triacetin | 5,00 g |
| | Copolyester (Hytrel$^R$) | 84,65 g |
| | | 100,00 g |

Herstellung:

Die Wirkstoffe und Triacetin werden zusammen solange erhitzt, bis sich eine klare Lösung ergibt. Hytrel wird in einem Mischer mit der warmen Lösung aus Wirkstoffen und Triacetin benetzt. Man mischt solange, bis die Mischung homogen ist. Dabei fordert Erwärmung der Mischung, z.B. infolge einer Erhöhung der Tourenzahl des Mischers, das Einziehen der Lösung in den Copolyester. Die Mischung wird auf einem Extruder zu Platten extrudiert, aus denen Medaillons (= Anhänger für Halsbänder) zu 2 x 4 cm ausgestanzt werden.

## Patentansprüche

1. Halsbänder und Halsbandanhänger (Medaillons) zur Bekämpfung von Parasiten an Tieren, dadurch gekennzeichnet, daß sie als Träger thermoplastische Elastomere auf Basis von Copolyestern und als Wirkstoffe parasitizide Wirkstoffe aus der Gruppe synthetische Pyrethroide gegebenenfalls neben üblichen Zusätzen enthalten.

2. Halsbänder und Halsbandanhänger (Medaillons) gemäß Anspruch 1, die als Wirkstoffe synthetische Pyrethroide der Formel I

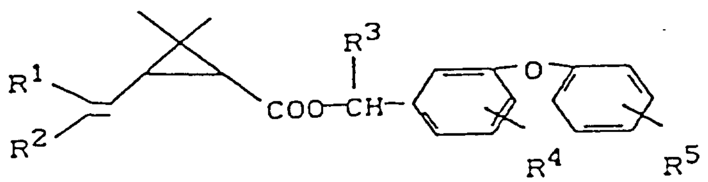

Formel I

in welcher

$R^1$ und $R^2$ für Halogen, gegebenenfalls halogensubstituiertes Alkyl, gegebenenfalls halogensubstituiertes Phenyl stehen,

$R^3$ für Wasserstoff oder CN steht,

$R^4$ für Wasserstoff oder Halogen steht,

$R^5$ für Wasserstoff oder Halogen steht,

α-(p-Cl-phenyl)-isovaleriansäure-α-cyano-3-phenoxy-benzylester (Fenvalerate) oder

2-Cyano-3-phenoxybenzyl-2-(2-chlor-α,α,α-trifluor-p-toluidino)-3-methylbutyrat (Fluvalinate)

enthalten.

3. Halsbänder oder Halsbandanhänger (Medaillons) gemäß Anspruch 1, die als Wirkstoffe synthetische Pyrethroide der Formel I

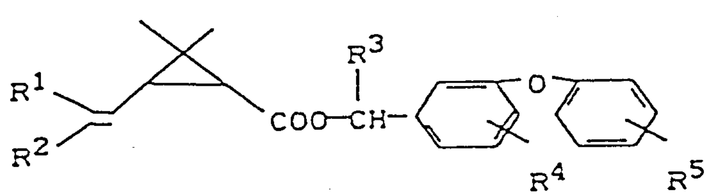

Formel I

in welcher

$R^1$ für Chlor steht,

$R^2$ für Chlor oder p-Chlorphenyl steht,

$R^3$ für CN steht,

$R^4$ für Fluor in 4-Stellung steht,

$R^5$ für Wasserstoff steht,

α-(p-Cl-phenyl)-isovaleriansaure-α-cyano-3-phenoxy-benzylester (Fenvalerate) oder

2-Cyano-3-phenoxybenzyl-2-(2-chlor-α,α,α-trifluor-p-toluidino)-3-methylbutyrat (Fluvalinate), enthalten.

4. Halsbänder oder Halsbandanhänger (Medaillons) gemäß Anspruch 1, die als Wirkstoffe die Wirkstoffe mit den common names Cyfluthrin, Flumethrin enthalten.

5. Verfahren zur Herstellung von Halsbändern oder Halsbandanhängern (Medaillons) gemäß Ansprüche 1 bis 6, dadurch gekennzeichnet, daß man thermoplastische Elastomere auf Basis von Copolyestern mit Wirkstoffen und gegebenenfalls üblichen Zusätzen mischt und in üblicher Weise verarbeitet.

## Claims

1. Collars and articles to be hung on collars (medallions) for controlling parasites on animals, characterized in that they contain as carriers thermoplastic elastomers based on copolyesters and as active compounds parasiticidal active compounds selected from the group consisting of synthetic pyrethroids plus, if desired, customary additives.

2. Collars and articles to be hung on collars (medallions) according to Claim 1 which contain as active compounds synthetic pyrethroids of the formula I

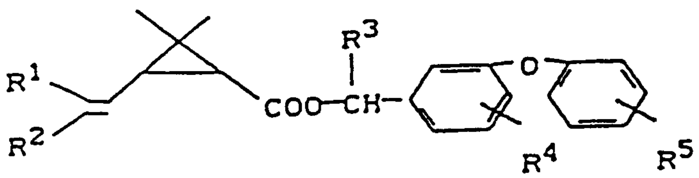

Formula I

where

$R^1$ and $R^2$ represent halogen, alkyl which may halogen-substituted, phenyl which may be halogen-substituted,

$R^3$ represents hydrogen or CN,

$R^4$ represents hydrogen or halogen,

$R^5$ hydrogen or halogen,

α-cyano-3-phenoxy-benzyl α-(p-Cl-phenyl)-isovalerate (fenvalerate) or

2-cyano-3-phenoxybenzyl 2-(2-chloro-α,α,α-trifluoro-p-toluidino)-3-methylbutyrate (fluvalinate).

3. Collars or articles to be hung on collars (medallions) according to Claim 1 which contain as active compounds synthetic pyrethroids of the formula I

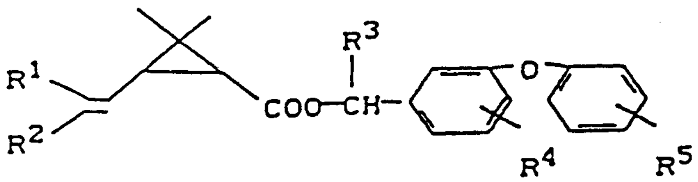

Formula I

where

R[1] represents chlorine,

R[2] represents chlorine or p-chlorophenyl,

R[3] represents CN,

R[4] represents fluorine in the 4-position,

R[5] represents hydrogen,

α-cyano-3-phenoxy-benzyl α-(p-Cl-phenyl)-isovalerate (fenvalerate) or

2-cyano-3-phenoxybenzyl 2-(2-chloro-α,α,α-trifluoro-p-toluidino)-3-methylbutyrate (fluvalinate).

**4.** Collars or articles to be hung on collars (medallions) according to Claim 1 containing as active compounds the active compounds having the common names cyfluthrin, flumethrin.

**5.** A process for producing collars or articles to be hung on collars (medallions) according to Claims 1 to 6, characterized in that thermoplastic elastomers based on copolyesters are mixed with active compounds and, if desired, customary additives and are processed in a customary manner.

**Revendications**

**1.** Colliers et pendentifs (médaillons) destinés à combattre des parasites sur des animaux, caractérisés en ce qu'ils contiennent comme support des élastomères thermoplastiques à base de copolyesters et, comme substances actives, des substances actives parasiticides du groupe des pyréthroïdes synthétiques, éventuellement à côté d'additifs classiques.

**2.** Colliers et pendentifs (médaillons) suivant la revendication 1, qui contiennent comme substances actives des pyréthroïdes synthétiques de formule I

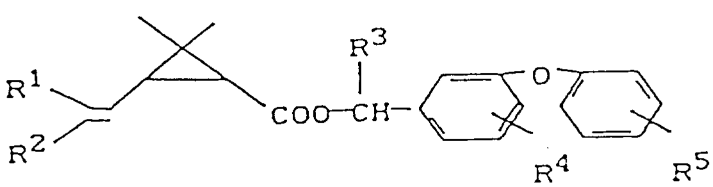

Formule I

dans laquelle

$R^1$ et $R^2$ représentent un halogène, un groupe alkyle éventuellement substitué par un halogène, un groupe phényle éventuellement substitué par un halogène,
$R^3$ est de l'hydrogène ou un groupe CN,
$R^4$ est de l'hydrogène ou un halogène,
$R^5$ est de l'hydrogène ou un halogène,

l'ester α-cyano-3-phénoxybenzylique de l'acide α-(p-Cl-phényl)-isovalérique (fenvalérate) ou le 2-cyano-3-phénoxybenzyl-2-(2-chloro-α,α,α-trifluoro-p-toluidino)-3-méthylbutyrate (fluvalinate).

3. Colliers ou pendentifs (médaillons) suivant la revendication 1, qui contiennent comme substances actives des pyréthroïdes synthétiques de formule I

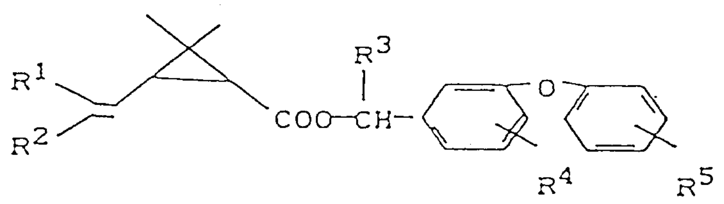

Formule I

dans laquelle

$R^1$ représente du chlore,
$R^2$ est du chlore ou un groupe p-chlorophényle,
$R^3$ est un groupe CN,
$R^4$ est du fluor en position 4,
$R^5$ est de l'hydrogène,

l' ester α-cyano-3-phénoxybenzylique de l'acide α-(p-Cl-phényl)-isovalérique (fenvalérate) ou le 2-cyano-3-phénoxybenzyl-2-(2-chloro-α,α,α-trifluoro-p-toluidino)-3-méthylbutyrate (fluvalinate).

4. Colliers ou pendentifs (médaillons) suivant la revendication 1, qui contiennent comme substances actives les substances actives ayant pour noms communs cyfluthrine et fluméthrine.

5. Procédé de fabrication de colliers ou de pendentifs (médaillons) suivant les revendications 1 à 6, caractérisé en ce qu'on mélange des élastomères thermoplastiques à base de copolyesters avec des substances actives et, le cas échéant, des additifs classiques et on met en oeuvre le mélange d'une manière classique.